# EUROPEAN PATENT APPLICATION

(11) **EP 2 811 275 A1**
(43) Date of publication of application: **10.12.2014**
(21) Application number: 14170899.0
(22) Date of filing: 03.06.2014
(51) Int. Cl.: G01J 5/34, G01J 5/08

(54) **Terahertz wave detecting device, camera, imaging apparatus and measuring apparatus**

(30) Priority: 05.06.2013 JP 2013118564
(71) Applicant: Seiko Epson Corporation, Tokyo 163 (JP)
(72) Inventor: Tomioka, Hiroto, Nagano 392-8502 (JP)
(74) Representative: Hoffmann Eitle

(57) **Abstract**

A terahertz wave detecting device includes: a substrate; and a plurality of detection elements that is arranged above the substrate, wherein the detection element includes a first metal layer that is provided on the substrate, a support substrate that is provided to be spaced from the first metal layer, an absorbing section that is provided above the support substrate and absorbs a terahertz wave to generate heat, and a converting section that includes a second metal layer, a pyroelectric layer and a third metal layer layered on the absorbing section, and converts the heat generated in the absorbing section into an electric signal.

## Description

### BACKGROUND

### 1. Technical Field

The present invention relates to a terahertz wave detecting device, a camera, an imaging apparatus and a measuring apparatus.

### 2. Related Art

An optical sensor that absorbs light to convert the light into heat and converts the heat into an electric signal has been used. Further, an optical sensor in which sensitivity with respect to a specific wavelength is improved is disclosed in JP-A-2013-44703. According to this disclosure, the optical sensor includes an absorbing section that absorbs light to generate heat, and a converting section that converts the heat into an electric signal.

The absorbing section has a rectangular parallelepiped shape, in which irregularities are formed on one surface of the absorbing section in a lattice form with a predetermined interval. Light incident to the absorbing section is diffracted or scattered, and thus, multiple absorption of light occurs. Further, light having a specific wavelength is absorbed in the absorbing section. Thus, the absorbing section can convert the light into heat in response to the light intensity of the light having the specific wavelength. One converting section is provided in one absorbing section. Further, the converting section converts a temperature change in the absorbing section into the electric signal. The specific wavelength has a wavelength of about 4 µm, and the interval of the irregularities is about 1.5 µm.

In recent years, a terahertz wave that is an electromagnetic wave having a frequency of 100 GHz to 30 THz has attracted attention. For example, the terahertz wave may be used for imaging, various measurements such as a spectral measurement, a nondestructive inspection or the like.

The terahertz wave is light having a long wavelength of 30 µm to 1 mm. When the terahertz wave is detected, according to the configuration disclosed in JP-A-2013-44703, the optical sensor increases in size. Further, since the thermal capacity of the absorbing section increases, the reaction rate is decreased, so that the detection accuracy of the optical sensor is lowered. Thus, there is a need for a terahertz wave detecting device capable of converting, even when a terahertz wave is detected, the terahertz wave into an electric signal with high accuracy.

### SUMMARY

An advantage of some aspects of the invention is to solve at least a part of the problems described above, and the invention can be implemented as the following forms or application examples.

### Application Example 1

This application example is directed to a terahertz wave detecting device including: a substrate; and a plurality of detection elements that is arranged above the substrate, in which the detection element includes a first metal layer that is provided on the substrate, a support substrate that is provided to be spaced from the first metal layer, an absorbing section that is provided above the support substrate and absorbs a terahertz wave to generate heat, and a converting section that includes a second metal layer, a pyroelectric layer and a third metal layer layered on the absorbing section, and converts the heat generated in the absorbing section into an electric signal.

According to this application example, the terahertz wave detecting device includes the substrate, and the detection elements are arranged above the substrate with a cavity being interposed therebetween. The detection element has the absorbing section and the converting section. The absorbing section absorbs the terahertz wave to generate heat. The absorbing section generates the heat according to the intensity of the terahertz wave incident to the absorbing section. The converting section converts the heat generated in the absorbing section into an electric signal. Accordingly, the converting section outputs the electric signal corresponding to the intensity of the terahertz wave incident to the absorbing section.

The cavity, the support substrate and the absorbing section are interposed between the first metal layer and the second metal layer. When the terahertz wave is incident to the absorbing section, the terahertz wave travels in the absorbing section and the cavity. The terahertz wave is reflected by the first metal layer and the second metal layer. Further, while the terahertz wave reflected by the first metal layer and the second metal layer is traveling inside the absorbing section, energy is absorbed in the absorbing section and is converted into heat. Accordingly, the terahertz wave that is incident to the terahertz wave detecting device is absorbed in the absorbing section with high efficiency, so that the energy is converted into the heat.

The absorbing section is interposed between the first metal layer and the second metal layer. When the terahertz wave is incident to the absorbing section, the terahertz wave travels in the absorbing section, the support substrate and the space between the support substrate and the first metal layer. The terahertz wave is reflected by the first metal layer and the second metal layer. Further, while the terahertz wave reflected by the first metal layer and the second metal layer is traveling inside the absorbing section, energy is absorbed in the absorbing section and is converted into heat. Accordingly, the terahertz wave that is incident to the terahertz wave detecting device is absorbed in the absorbing section with high efficiency, so that the energy is converted into the heat. As a result, the terahertz wave detecting device can absorb the incident terahertz wave with high efficiency and convert the incident terahertz wave into the electric signal with high accuracy.

### Application Example 2

This application example is directed to the terahertz wave detecting device according to the application example described above, wherein the plurality of detection elements are arranged so that the terahertz wave is diffracted between the adjacent converting sections.

According to this application example, since the plural detection elements are arranged, the plural converting sections are also arranged. Further, a portion between the adjacent converting sections functions as a slit. Accordingly, the terahertz wave is diffracted between the adjacent converting sections, and changes the traveling direction to enter between the first metal layer and the second metal layer. As a result, the terahertz wave detecting device can absorb the incident terahertz wave with high efficiency and convert the incident terahertz wave into the electric signal with high accuracy.

### Application Example 3

This application example is directed to the terahertz wave detecting device according to the application example described above, wherein an arrangement interval of the second metal layers is shorter than a wavelength in vacuum of the terahertz wave absorbed by the absorbing section.

According to this application example, the second metal layers are arranged with the interval shorter than the wavelength in vacuum of the terahertz wave absorbed by the absorbing section. Here, since the interval between the adjacent second metal layers is narrow, the terahertz wave is easily diffracted. Accordingly, the terahertz wave can easily enter between the first metal layer and the second metal layer.

### Application Example 4

This application example is directed to the terahertz wave detecting device according to the application example described above, wherein the detection element includes a pillar arm portion that is connected to the support substrate and a supporting section that supports the support substrate to be spaced from the substrate, and the length of the second metal layer and the length of the absorbing section in an arrangement direction of the detection elements are shorter than the wavelength in vacuum of the terahertz wave absorbed by the absorbing section and are longer than 10 µm.

According to this application example, the absorbing section is supported by the support substrate, and the arm portion is connected to the support substrate. The length of the second metal layer and the length of the absorbing section are shorter than the wavelength of the terahertz wave in vacuum. Thus, since the absorbing section can reduce the weight, it is possible to narrow the arm portion. Alternatively, it is possible to lengthen the arm portion. When the arm portion is narrow or when the arm portion is long, since it is difficult to perform thermal conduction, the detection element can easily detect the heat. Further, the length of the second metal layer is longer than 10 µm. Thus, since the terahertz wave is multiply reflected by the first metal layer and the second metal layer, the absorbing section can absorb the terahertz wave with high efficiency. As a result, the detection element can detect the terahertz wave with high sensitivity.

### Application Example 5

This application example is directed to the terahertz wave detecting device according to the application example described above, wherein the length of the second metal layer and the length of the absorbing section in the arrangement direction of the detection elements are shorter than a length that is twice the amplitude of the terahertz wave absorbed by the absorbing section.

According to this application example, the absorbing section is supported by the support substrate, and the arm portion is connected to the support substrate. The length of the second metal layer and the length of the absorbing section are shorter than the length that is twice the length of the amplitude of the terahertz wave. When the terahertz wave is an elliptical deflection, the amplitude of the terahertz wave represents the amplitude of an ellipse in a longitudinal axis direction. Thus, it is possible to reduce the weight of the absorbing section, and thus, it is possible to narrow the arm portion. Alternatively, it is possible to lengthen the arm portion. When the arm portion is narrow or when the arm portion is long, it is difficult to conduct the heat, and thus, the detection element can easily detect the heat. Further, the length of the second metal layer is longer than 10 µm. Thus, since the terahertz wave is multiply reflected by the first metal layer and the second metal layer, the absorbing section can absorb the terahertz wave with high efficiency. As a result, the detection element can detect the terahertz wave with high sensitivity.

### Application Example 6

This application example is directed to the terahertz wave detecting device according to the application example described above, wherein a material of the absorbing section includes any one of zirconium oxide, barium titanate, hafnium oxide and hafnium silicate.

According to this application example, the material of the absorbing section may include any one of zirconium oxide, barium titanate, hafnium oxide and hafnium silicate. The zirconium oxide, the barium titanate, the hafnium oxide and the hafnium silicate are materials having a high dielectric constant. Accordingly, the absorbing section can generate a dielectric loss in the terahertz wave, thereby converting the energy of the terahertz wave into the heat with high efficiency.

### Application Example 7

This application example is directed to the terahertz wave detecting device according to the application example, wherein a main material of the support substrate is silicon.

According to this application example, the main material of the support substrate is silicon. Since the silicon and silicon compound are dielectric, the support substrate can absorb the terahertz wave to generate heat. Further, since the silicon and silicon compound have stiffness, they can function as a structure that supports the absorbing section and the converting section.

### Application Example 8

This application example is directed to a camera including: a terahertz wave generating section that generates a terahertz wave; a terahertz wave detecting section that detects the terahertz wave that is emitted from the terahertz wave generating section and passes through or is reflected from an object; and a storage section that stores a detection result of the terahertz wave detecting section, wherein the terahertz wave detecting section is any one of the above-described terahertz wave detecting devices.

According to this application example, the object is irradiated with the terahertz wave emitted from the terahertz wave generating section. The terahertz wave passes through or is reflected by the object, and then, is incident to the terahertz wave detecting section. The terahertz wave detecting section outputs the detection result of the terahertz wave to the storage section, and the storage section stores the detection result. Thus, the camera can output data on the traveling terahertz wave from the object according to a request. As the terahertz wave detecting section, the terahertz wave detecting device as described above is used. Accordingly, the camera according to this application example can be provided as an apparatus including the terahertz wave detecting device that converts the incident terahertz wave into an electric signal with high accuracy.

### Application Example 9

This application example is directed to an imaging apparatus including: a terahertz wave generating section that generates a terahertz wave; a terahertz wave detecting section that detects the terahertz wave that is emitted from the terahertz wave generating section and passes through or is reflected from an object; and an image forming section that forms an image of the object based on a detection result of the terahertz wave detecting section, wherein the terahertz wave detecting section is any one of the above-described terahertz wave detecting devices.

According to this application, the object is irradiated with the terahertz wave emitted from the terahertz wave generating section. The terahertz wave passes through or is reflected by the object, and then, is incident to the terahertz wave detecting section. The terahertz wave detecting section outputs the detection result of the terahertz wave to the image forming section, and the image forming section forms an image of the object using the detection result. As the terahertz wave detecting section, the terahertz wave detecting device as described above is used. Accordingly, the imaging apparatus according to this application example can be provided as an apparatus including the terahertz wave detecting device that converts the incident terahertz wave into an electric signal with high accuracy.

### Application Example 10

This application example is directed to a measuring apparatus including: a terahertz wave generating section that generates a terahertz wave; a terahertz wave detecting section that detects the terahertz wave that is emitted from the terahertz wave generating section and passes through or is reflected from an object; and a measuring section that measures the object based on a detection result of the terahertz wave detecting section, wherein the terahertz wave detecting section is any one of the above-described terahertz wave detecting devices.

According to this application example, the object is irradiated with the terahertz wave emitted from the terahertz wave generating section. The terahertz wave passes through or is reflected by the object, and then, is incident to the terahertz wave detecting section. The terahertz wave detecting section outputs the detection result of the terahertz wave to the measuring section, and the measuring section measures the object using the detection result. As the terahertz wave detecting section, the terahertz wave detecting device as described above is used. Accordingly, the measuring apparatus according to this application example can be provided as an apparatus including the terahertz wave detecting device that converts the incident terahertz wave into an electric signal with high accuracy.

### BRIEF DESCRIPTION OF THE DRAWINGS

The invention will be described with reference to the accompanying drawings, wherein like numbers reference like elements.
Fig. 1A is a plan view schematically illustrating a structure of a terahertz wave detecting device according to a first embodiment of the invention, and Fig. 1B is an enlarged view of a main part representing a structure of pixels according to the first embodiment of the invention.
Fig. 2A is a plan view schematically illustrating an arrangement of first detection elements, and Figs. 2B and 2C are diagrams schematically illustrating a terahertz wave.
Fig. 3A is a plan view schematically illustrating a structure of the first detection element, and Fig. 3B is a side sectional view schematically illustrating the structure of the first detection element.
Figs. 4A to 4D are diagrams schematically illustrating a manufacturing method of the first detection element.
Figs. 5A to 5C are diagrams schematically illustrating a manufacturing method of the first detection element.
Figs. 6A and 6B are diagrams schematically illustrating a manufacturing method of the first detection element.
Figs. 7A and 7B are diagrams schematically illustrating a manufacturing method of the first detection element.
Fig. 8A is a block diagram illustrating a configuration of an imaging apparatus according to a second embodiment of the invention, and Fig. 8B is a graph illustrating a spectrum of an object in a terahertz band according to the second embodiment of the invention.
Fig. 9 is a diagram illustrating an image representing a distribution of materials A, B and C of an object.
Fig. 10 is a block diagram illustrating a configuration of a measuring apparatus according to a third embodiment of the invention.
Fig. 11 is a block diagram illustrating a configuration of a camera according to a fourth embodiment of the invention.
Figs. 12A and 12B are plan views schematically illustrating a configuration of a first detection element according to a modification example.

### DESCRIPTION OF EXEMPLARY EMBODIMENTS

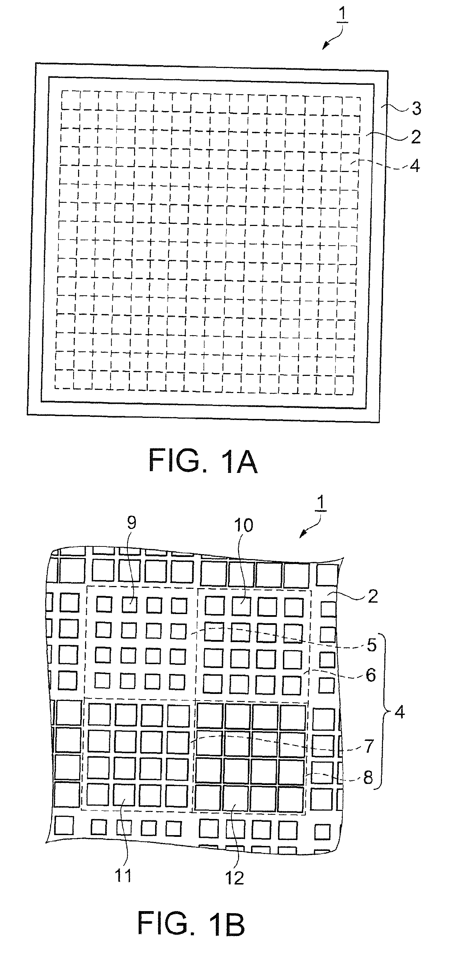

In exemplary embodiments of the invention, characteristic examples of a terahertz wave detecting device will be described with reference to Figs. 1A to 12. Hereinafter, the embodiments will be described with reference to the accompanying drawings. Here, in the respective drawings, each component is shown in a different scale so as to be a recognizable size in each drawing.

### First Embodiment

A terahertz wave detecting device according to a first embodiment will be described with reference to Figs. 1A to 7B. Fig. 1A is a plan view schematically illustrating a structure of a terahertz wave detecting device. As shown in Fig. 1A, a terahertz wave detecting device 1 includes a base substrate 2 that is a rectangular substrate, and a frame section 3 is provided around the base substrate 2. The frame section 3 has a function of protecting the base substrate 2. Pixels 4 are arranged in a lattice form in the base substrate 2. The numbers of rows and columns of the pixels 4 are not particularly limited. As the number of pixels 4 increases, it is possible to recognize the shape of an object to be detected with high accuracy. In the present embodiment, in order to easily understand the figure, the terahertz wave detecting device 1 is set as a device that includes 16x16 pixels 4.

Fig. 1B is an enlarged view of a main part representing a structure of the pixels. As shown in Fig. 1B, the pixels 4 include first pixels 5, second pixels 6, third pixels 7 and fourth pixels 8. In a planar view (seen in a plate thickness direction of the base substrate 2) of the base substrate 2, the first pixels 5 to the fourth pixels 8 are formed in a rectangular shape and have the same area. Further, the first pixels 5 to the fourth pixels 8 are arranged in four places divided by lines passing through the center of gravity of the pixels 4.

In the first pixels 5, first detection elements 9 are arranged in a 4x4 lattice form as detection elements, and in the second pixels 6, second detection elements 10 are arranged in a 4x4 lattice form as detection elements. In the third pixels 7, third detection elements 11 are arranged in a 4x4 lattice form as detection elements, and in the fourth pixels 8, fourth detection elements 12 are arranged in a 4x4 lattice form as detection elements. The first detection elements 9 to the fourth detection elements 12 have the same structure, and have different sizes in the planar view of the base substrate 2. The second detection elements 10 are larger than the first detection elements 9, and the third detection elements 11 are larger than the second detection elements 10. Further, the fourth detection elements 12 are larger than the third detection elements 11.

The first detection elements 9 to the fourth detection elements 12 have a correlation between the size in the planar view of the base substrate 2 and a resonance frequency of a terahertz wave to be detected. A large detection element can detect a terahertz wave having a long wavelength, compared with a small detection element. Wavelengths of terahertz waves detected by the first detection element 9, the second detection element 10, the third detection element 11 and the fourth detection element 12 are referred to as a first wavelength, a second wavelength, a third wavelength and a fourth wavelength, respectively. Here, the fourth wavelength is the longest wavelength among these wavelengths. The third wavelength is the second longest wavelength, and the second wavelength is the next. Further, the first wavelength is the shortest wavelength among these wavelengths.

In the pixels 4, four types of detection elements of the first detection elements 9 to the fourth detection elements 12 are arranged. Accordingly, the terahertz wave detecting device 1 can detect terahertz waves having four types of wavelengths of the first wavelength to the fourth wavelength. Since the first detection elements 9 to the fourth detection elements 12 have the same structure, the structure of the first detection elements 9 will be described, and descriptions of the second detection elements 10 to the fourth detection elements 12 will not be repeated.

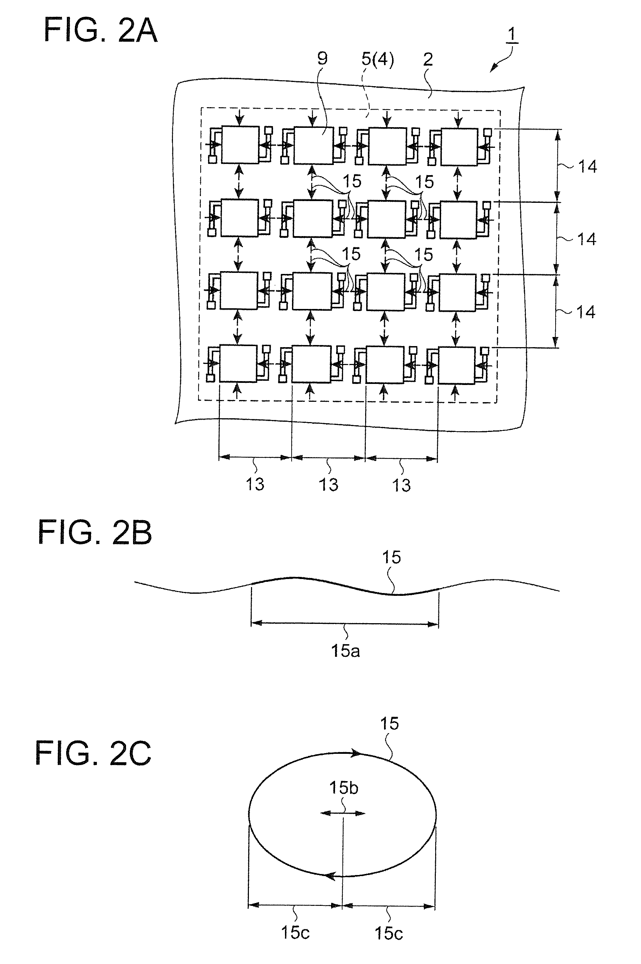

Fig. 2A is a plan view schematically illustrating an arrangement of the first detection elements. Figs. 2B and 2C are diagrams schematically illustrating a terahertz wave. As shown in Fig. 2A, the first detection elements 9 are disposed in the 4x4 lattice form in the first pixels 5. In each row, the first detection elements 9 are arranged being spaced from each other at a uniform interval. This interval is referred to as a first interval 13 that is an interval. In each column, the first detection elements 9 are arranged being spaced from each other at a uniform interval. This interval is referred to as a second interval 14 that is another interval. A terahertz wave 15 travels in a normal direction with respect to a plane of the base substrate 2 on which the first detection elements 9 are provided. When reaching the first detection element 9 (specifically, a converting section 35 to be described later), the terahertz wave 15 is diffracted to enter the inside of the first detection element 9. A portion between the adjacent first detection elements 9 (the converting sections 35) is narrow to function as a slit with respect to the terahertz wave 15. Accordingly, a traveling direction of the incident terahertz wave 15 is changed toward the inside of the first detection element 9 at an end of the first detection element 9.

As shown in Fig. 2B, the terahertz wave 15 is light that travels in vacuum with a uniform wavelength 15a. Further, the terahertz wave 15 is light detected by the first pixels 5. Here, it is preferable that the first interval 13 and the second interval 14 that are the intervals in directions where the first detection elements 9 are arranged to be shorter than the wavelength 15a. In a case where the first interval 13 and the second interval 14 are shorter than the wavelength 15a, since the terahertz wave 15 is easily diffracted, the first detection element 9 can receive the terahertz wave 15 to enhance the detection sensitivity.

As shown in Fig. 2C, the terahertz wave 15 may be deflected. The deflection includes an elliptical deflection or a linear deflection. Here, a length direction of the deflection is referred to as a deflection direction 15b. The deflection direction 15b is a direction that is orthogonal to the traveling direction of the terahertz wave 15. Further, a length that is a half of the length of the terahertz wave 15 in the deflection direction 15b is referred to as an amplitude 15c. Here, it is preferable that the first interval 13 and the second interval 14 be shorter than a length that is twice the amplitude 15c. In a case where the first interval 13 and the second interval 14 are shorter than the length that is twice the amplitude 15c, since the terahertz wave 15 is easily diffracted, the first detection element 9 can receive the terahertz wave 15 to enhance the detection sensitivity.

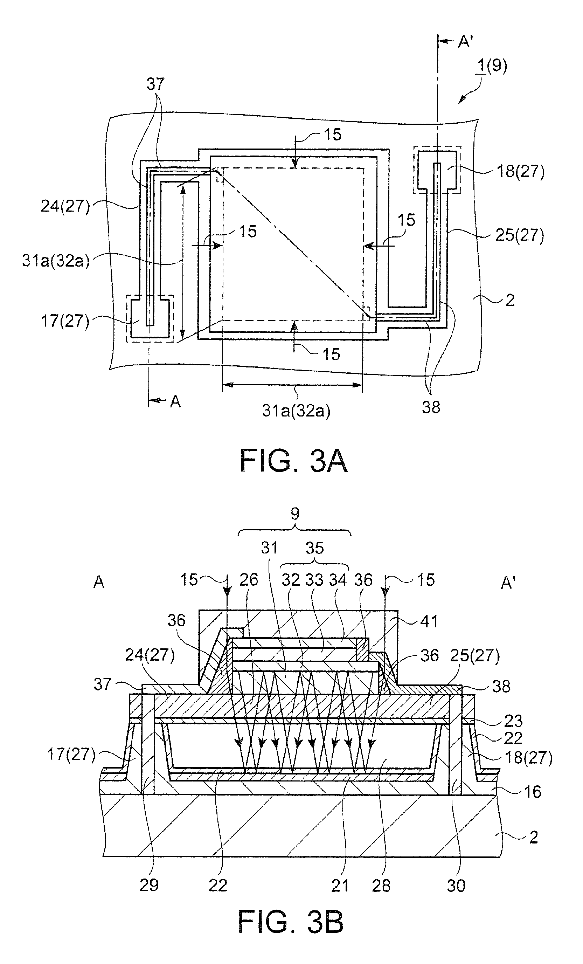

Fig. 3A is a plan view schematically illustrating a structure of the first detection element, and Fig. 3B is a side sectional view schematically illustrating the structure of the first detection element. Fig. 3B is a sectional view taken along line A-A' in Fig. 3A. As shown in Figs. 3A and 3B, a first insulating layer 16 is provided on the base substrate 2. A material of the base substrate 2 is silicon. A material of the first insulating layer 16 is not particularly limited, but silicon nitride, nitride silicon carbide, silicon dioxide or the like may be used. In the present embodiment, for example, as the material of the first insulating layer 16, silicon dioxide is used. A wiring and a circuit such as a drive circuit are formed on a surface of the base substrate 2 on the side of the first insulating layer 16. The first insulating layer 16 covers the circuit on the base substrate 2 to prevent an unexpected current flow.

A first pillar portion 17 and a second pillar portion 18 are provided on the first insulating layer 16. Materials of the first pillar portion 17 and the second pillar portion 18 are the same as that of the first insulating layer 16. The shape of the first pillar portion 17 and the second pillar portion 18 is a truncated pyramid obtained by flattening a top portion of a quadrangular pyramid. On the first insulating layer 16, a first metal layer 21 is provided at a place excluding a place where the first insulating layer 16 is in contact with the first pillar portion 17 and the second pillar portion 18. On an upper side of the first metal layer 21 and on side surfaces of the first pillar portion 17 and the second pillar portion 18, a first protecting layer 22 is provided. The first protecting layer 22 is a layer that protects the first metal layer 21, the first pillar portion 17 and the second pillar portion 18 from an etchant used when the first pillar portion 17, the second pillar portion 18 and the like are formed. When the first pillar portion 17, the second pillar portion 18, the first metal layer 21 and the first insulating layer 16 have resistance to the etchant, the first protecting layer 22 may not be provided.

On the first pillar portion 17, a first arm portion 24 that is an arm portion and a support portion is provided with a second protecting layer 23 being interposed therebetween, and on the second pillar portion 18, a second arm portion 25 that is an arm portion and a support portion with the second protecting layer 23 being interposed therebetween. Further, a support substrate 26 is disposed in connection with the first arm portion 24 and the second arm portion 25, in which the first arm portion 24 and the second arm portion 25 support the support substrate 26. A supporting section 27 is configured by the first pillar portion 17, the second pillar portion 18, the first arm portion 24 and the second arm portion 25. The support substrate 26 is supported by the supporting section 27 to be spaced from the base substrate 2. The second protecting layer 23 is provided on a surface that faces the base substrate 2 in the support substrate 26, the first pillar portion 17 and the second pillar portion 18. The second protecting layer 23 is a film that protects the first arm portion 24, the second arm portion 25 and the support substrate 26 from the etchant used when the support substrate 26, the first pillar portion 17, the second pillar portion 18 and the like are formed.

A material of the first metal layer 21 may be a material that easily reflects the terahertz wave 15, and for example, it is preferable to use a material having a specific resistance of 10 to 100. Further, it is preferable that the material of the first metal layer 21 be a material having a sheet resistance of 10 ohm/□ or more. As the material of the first metal layer 21, for example, a metal such as gold, copper, iron, aluminum, zinc, chrome, lead or titanium or an alloy such as nichrome may be used. Materials of the first protecting layer 22 and the second protecting layer 23 are not particularly limited as long as they have resistance against the etchant. In the present embodiment, for example, as the materials of the first protecting layer 22 and the second protecting layer 23, aluminum oxide is used. When the first arm portion 24, the second arm portion 25 and the support substrate 26 have resistance against the etchant, the second protecting layer 23 may not be provided.

The support substrate 26 is spaced from the base substrate 2 and the first metal layer 21 by the supporting section 27, and a cavity 28 is formed between the base substrate 2 and the support substrate 26. The shape of the first arm portion 24 and the second arm portion 25 is a shape in which a rectangular pillar is bent at a right angle, and a part thereof is arranged in parallel with a side of the support substrate 26. Thus, the first arm portion 24 and the second arm portion 25 are elongated, to thereby suppress heat conduction from the support substrate 26 to the base substrate 2.

A first through electrode 29 that passes through the first pillar portion 17 and the first arm portion 24 is provided between the front surface of the base substrate 2 and the front surface of the first arm portion 24 on the upper side in the figure. Further, a second through electrode 30 that passes through the second pillar portion 18 and the second arm portion 25 is provided between the front surface of the base substrate 2 and the front surface of the second arm portion 25.

A material of the support substrate 26 is not particularly limited as long as it has stiffness, transmits and absorbs the terahertz wave 15 and can be machined. As the material of the support substrate 26, it is preferable to use silicon. In the present embodiment, for example, a three-layer structure of silicon dioxide, silicon nitride and silicon dioxide is used. Materials of the first through electrode 29 and the second through electrode 30 are not particularly limited as long as they are conductive and can form fine patterns, and for example, metal such as titanium, tungsten or aluminum may be used.

A dielectric layer 31 that is an absorbing section of a rectangular shape in a planar view of the base substrate 2 is provided on the support substrate 26. In other words, the support substrate 26 supports the dielectric layer 31 and the converting section 35 (to be described later). The dielectric layer 31 is a layer that absorbs the incident terahertz wave 15 to generate heat. In the present embodiment, the thickness of the dielectric layer 31 is 100 nm to 1 µm, for example, and the dielectric constant of the dielectric layer 31 is 2 to 100, for example. It is preferable that the specific resistance of the dielectric layer 31 be 10 to 100. As a material of the dielectric layer 31, zirconium oxide, barium titanate, hafnium oxide, hafnium silicate, titanium oxide, polyimide, silicon nitride or aluminum oxide, or a layered body thereof may be used.

The converting section 35 in which a second metal layer 32, a pyroelectric layer 33 and a third metal layer 34 are sequentially layered is provided on the dielectric layer 31. The converting section 35 has a function of a pyroelectric sensor that converts heat into an electric signal. A material of the second metal layer 32 may be a metal that has high conductivity and reflects the terahertz wave 15, and preferably, a metal further having heat resistance. In the present embodiment, for example, the second metal layer 32 is obtained by sequentially layering an iridium layer, an iridium oxide layer and a platinum layer from the side of the support substrate 26. The iridium layer has an alignment control function, the iridium oxide layer has a reducing gas barrier function, and the platinum layer has a seed layer function. On the second metal layer 32, a layer having the same material as that of the first metal layer 21 may be disposed on the side of the dielectric layer 31. Thus, the second metal layer 32 can reflect the terahertz wave 15 with high efficiency.

A material of the pyroelectric layer 33 is a dielectric capable of achieving a pyroelectric effect, which can generate change in an electricity polarization quantity in accordance with a temperature change. As the material of the pyroelectric layer 33, lead zirconate titanate (PZT) or PZTN in which Nb (niobium) is added to PZT may be used.

A material of the third metal layer 34 may be a metal having high conductivity, and preferably, a metal further having heat resistance. In the present embodiment, as the material of the third metal layer 34, for example, on the material of the third metal layer 34, a platinum layer, an iridium oxide layer and an iridium layer are sequentially layered from the side of the pyroelectric layer 33. The platinum layer has an alignment matching function, the iridium oxide layer has a reducing gas barrier function, and the iridium layer has a low resistance layer function. The materials of the third metal layer 34 and the second metal layer 32 are not limited to the above examples, and for example, a metal such as gold, copper, iron, aluminum, zinc, chrome, lead or titanium or an alloy such as nichrome may be used.

A second insulating layer 36 is disposed around the converting section 35. Further, a slope is provided in the converting section 35 on the side of the first arm portion 24 by the second insulating layer 36, and also, a slope is provided in the dielectric layer 31 on the side of the second pillar portion 18 by the second insulating layer 36. Further, a first wiring 37 that connects the first through electrode 29 and the third metal layer 34 is provided on the first arm portion 24. The first wiring 37 is provided on the slope of the second insulating layer 36. A second wiring 38 that connects the second through electrode 30 and the second metal layer 32 is provided on the second arm portion 25. The second wiring 38 is provided on the slope of the second insulating layer 36.

An electric signal output by the converting section 35 is transmitted to the electric circuit on the base substrate 2 through the first wiring 37, the first through electrode 29, the second wiring 38 and the second through electrode 30. The first wiring 37 is connected to the third metal layer 34 from the first arm portion 24 through above the second insulating layer 36. Thus, the first wiring 37 is prevented from being in contact with the second metal layer 32 and the pyroelectric layer 33. Further, an insulating layer (not shown) may be provided to cover the first wiring 37 and the second wiring 38. Thus, an unexpected current can be prevented from flowing into the first wiring 37 and the second wiring 38. As a material of the second insulating layer 36, a silicon film, a silicon nitride film, or a silicon oxide film may be used. In the present embodiment, the silicon nitride film is used as the second insulating layer 36, for example.

The first detection elements 9 are arranged on the base substrate 2 in the lattice form, and the intervals of the second metal layers 32 are the same as the first interval 13 and the second interval 14. Further, the second metal layers 32 are arranged with smaller intervals compared with the wavelength in vacuum of the terahertz wave 15. Thus, the portion between the adjacent first detection elements 9 functions as the slit with respect to the terahertz wave 15.

When the first detection elements 9 are irradiated with the terahertz wave 15, the terahertz wave 15 is diffracted while passing between the adjacent first detection elements 9 (the second metal layers 32). Further, as the traveling direction of the terahertz wave 15 is changed, a part of the terahertz wave 15 enters between the first metal layer 21 and the second metal layer 32. Further, the terahertz wave 15 is multiply reflected between the first metal layer 21 and the second metal layer 32 to travels in the dielectric layer 31, the support substrate 26 and the cavity 28.

Energy of the terahertz wave 15 that travels in the dielectric layer 31 and the support substrate 26 is converted into heat. Since the dielectric layer 31 has a high dielectric constant, the dielectric layer 31 generates heat with high efficiency. Further, as the light intensity of the terahertz wave 15 that is incident to the first detection element 9 is strong, the dielectric layer 31 and the support substrate 26 are heated, and thus, the temperatures of the dielectric layer 31 and the support substrate 26 increase. The heat of the dielectric layer 31 and the support substrate 26 is conducted to the converting section 35. Thus, the temperature of the converting section 35 increases. Then, the converting section 35 converts the increased temperature into an electric signal and outputs the result to the first through electrode 29 and the second through electrode 30.

The heat accumulated in the support substrate 26 and the converting section 35 is conducted to the base substrate 2 through the third metal layer 34, the first wiring 37, the first arm portion 24 and the first pillar portion 17. Further, the heat accumulated in the support substrate 26 and the converting section 35 is conducted to the base substrate 2 through the second metal layer 32, the second wiring 38, the second arm portion 25 and the second pillar portion 18. Accordingly, when the light intensity of the terahertz wave 15 that is incident to the first detection element 9 decreases, the temperature of the support substrate 26 and the converting section 35 decreases with the lapse of time. Accordingly, the first detection element 9 can detect variation of the light intensity of the terahertz wave 15 that is incident to the first detection element 9.

The dielectric layer 31 is a square in a planar view, and has a side length of a dielectric layer length 31a. The second metal layer 32 is also a square in a planar view, and has a side length of a second metal layer length 32a. Although not particularly limited, in the present embodiment, for example, the dielectric layer length 31a and the second metal layer length 32a are the same in length. It is preferable that the dielectric layer length 31a and the second metal layer length 32a be shorter than the wavelength 15a in vacuum of the terahertz wave 15. Further, it is preferable that the dielectric layer length 31a and the second metal layer length 32a be shorter than the length that is twice the amplitude 15c.

By shortening the dielectric layer length 31a and the second metal layer length 32a, it is possible to reduce the weight of the dielectric layer 31. Thus, it is possible to narrow the first arm portion 24 and the second arm portion 25, and the first detection element 9 can increase thermal insulation of the first arm portion 24 and the second arm portion 25. As a result, dissipation of the heat from the converting section 35 and the support substrate 26 becomes difficult, and thus, it is possible to improve the detection accuracy of the terahertz wave 15. Further, in a case where the dielectric layer 31 is small, since thermal capacity is small compared with a case where the dielectric layer 31 is large, the temperature change increases according to the heat generation. Thus, the dielectric layer 31 can absorb the terahertz wave 15 with high efficiency to convert the generated heat into temperature.

It is preferable that the dielectric layer length 31a and the second metal layer length 32a be longer than 10 µm. Here, it is possible to absorb the terahertz wave 15 by the dielectric layer 31 with high efficiency. If the dielectric layer length 31a and the second metal layer length 32a are shorter than 10 µm, a probability that the terahertz wave 15 passes through the dielectric layer 31 increases, and thus, the efficiency of absorbing the terahertz wave 15 to generate the heat decreases.

A third protecting layer 41 is provided to cover the converting section 35, the dielectric layer 31 and the support substrate 26. The third protecting layer 41 suppresses dust from adhering to the converting section 35 and the support substrate 26. Further, the third protecting layer 41 prevents the converting section 35 and the support substrate 26 from deteriorating by intrusion of oxygen or moisture. As a material of the third protecting layer 41, a silicon film, a silicon nitride film, a silicon oxide film or various resin materials may be used. In the present embodiment, for example, the silicon nitride film is used as the third protecting layer 41. The third protecting layer 41 may further cover the first arm portion 24 and the second arm portion 25. Thus, the third protecting layer 41 can suppress dust from adhering to the first wiring 37 and the second wiring 38, or can suppress unexpected electricity from flowing therein.

The positions of the second metal layers 32 have the same appearance as the arrangement of the respective first detection elements 9. Accordingly, the first interval 13 and the second interval 14 that are the intervals of the respective first detection elements 9 has the same length as the intervals of the second metal layers 32. Further, by setting the intervals of the second metal layers 32 to be shorter than the wavelength 15a, it is possible to shorten the intervals of the adjacent second metal layers 32. Thus, it is possible to diffract the terahertz wave 15 with high efficiency to allow the terahertz wave 15 to travel toward the inside of the support substrate 26.

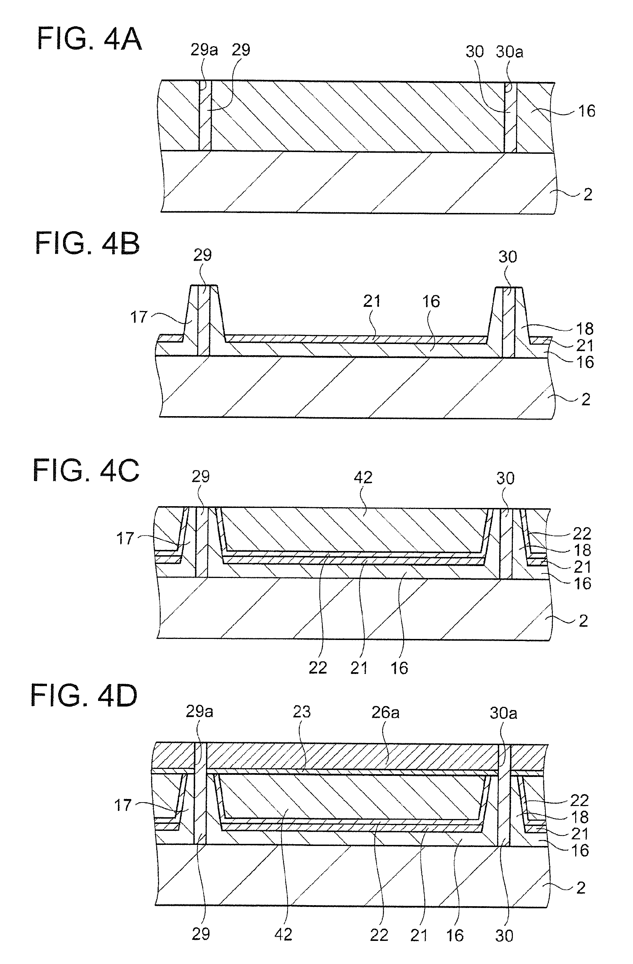

Next, a manufacturing method of the first detection element 9 will be described with reference to Figs. 4A to 7B. Since a manufacturing method of the second detection element 10 to the fourth detection element 12 is the same as the manufacturing method of the first detection element 9, description thereof will not be repeated. Figs. 4A to 7B are diagrams schematically illustrating the manufacturing method of the first detection element 9. As shown in Fig. 4A, the first insulating layer 16 is formed on the base substrate 2. The first insulating layer 16 is formed by a chemical vapor deposition (CVD) method, for example. Then, a first through hole 29a and a second through hole 30a are patterned and formed by a photolithography method and an etching method on the first insulating layer 16. Hereinafter, it is assumed that the patterning is performed by the photolithography method and the etching method. Then, the first through electrode 29 and the second through electrode 30 are formed in the first through hole 29a and the second through hole 30a, respectively. The first through electrode 29 and the second through electrode 30 are formed by a plating method or a sputtering method, for example.

As shown in Fig. 4B, the first insulating layer 16 is patterned to form the first pillar portion 17 and the second pillar portion 18. The first pillar portion 17 and the second pillar portion 18 can be formed so that side surfaces thereof are inclined using a dry etching method by adjusting manufacturing conditions. Then, the first metal layer 21 is provided on the first insulating layer 16 excluding the place where the first pillar portion 17 and the second pillar portion 18 are provided. The first metal layer 21 is formed by a sputtering method, and is then patterned, for example. On the side surfaces of the first pillar portion 17 and the second pillar portion 18, the first metal layer 21 may be formed.

As shown in Fig. 4C, the first protecting layer 22 is formed on the first metal layer 21, the first pillar portion 17 and the second pillar portion 18. An aluminum oxide film is formed by a CVD method. This film is used as the first protecting layer 22. Thus, the first insulating layer 16, the first pillar portion 17 and the second pillar portion 18 are in a state of being covered by the aluminum oxide film.

Then, a sacrificial layer 42 formed of silicon dioxide is formed on the first protecting layer 22 by a CVD method. Here, a silicon dioxide film is formed at a height that exceeds the first pillar portion 17 and the second pillar portion 18, and the film thickness of the sacrificial layer 42 is set to be thicker than the height of the first pillar portion 17 and the second pillar portion 18. Then, an upper surface of the sacrificial layer 42 is flattened by a chemical mechanical polishing (CMP) method, so that the upper surfaces of the first pillar portion 17 and the second pillar portion 18 and the surface of the sacrificial layer 42 have the same surface. Further, the first metal layer 21, the first protecting layer 22 and the sacrificial layer 42 that remain on the upper surfaces of the first pillar portion 17 and the second pillar portion 18 are removed.

As shown in Fig. 4D, the second protecting layer 23 is formed on the sacrificial layer 42. The second protecting layer 23 is formed by a CVD method or a sputtering method. Then, a support substrate layer 26a is formed on the second protecting layer 23. The support substrate layer 26a is a layer that serves as a source of the first arm portion 24, the second arm portion 25 and the support substrate 26. The support substrate layer 26a is formed by a CVD method or a sputtering method, for example.

Then, the second protecting layer 23 and the support substrate layer 26a are patterned to form the first through hole 29a and the second through hole 30a. The first through hole 29a and the second through hole 30a are formed so that the first through electrode 29 and the second through electrode 30 respectively formed in the previous processes are exposed. Then, the material of the first through electrode 29 is filled in the first through hole 29a, and the material of the second through electrode 30 is filled in the second through hole 30a. The first through electrode 29 and the second through electrode 30 are formed by a plating method or a sputtering method, for example. Through the above processes, the first through electrode 29 and the second through electrode 30 that are extended from the front surface of the support substrate layer 26a to the base substrate 2 are formed.

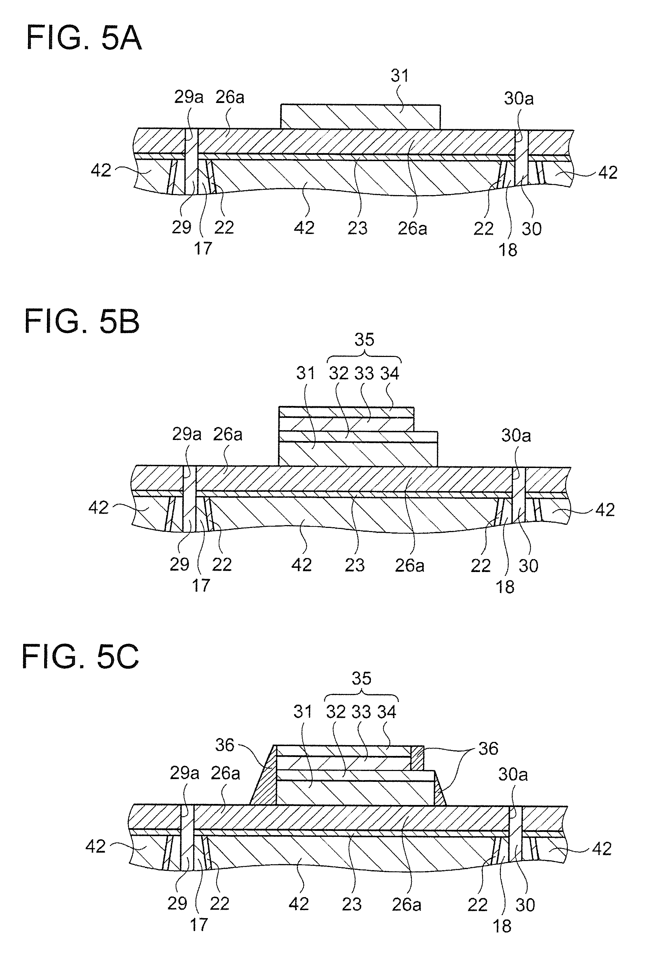

As shown in Fig. 5A, the material of the dielectric layer 31 is disposed in the support substrate layer 26a. The material of the dielectric layer 31 is layer-formed by a CVD method, for example, and is then patterned. Then, the material of the disposed dielectric layer 31 is baked to form the dielectric layer 31. Here, the baking temperature is not particularly limited, but in the present embodiment, for example, the baking is performed at about 700°C.

As shown in Fig. 5B, the second metal layer 32, the pyroelectric layer 33 and the third metal layer 34 are sequentially layered on the dielectric layer 31. Thus, the converting section 35 is formed. The second metal layer 32 and the third metal layer 34 are formed by a sputtering method, for example, and by being patterned. The pyroelectric layer 33 is formed by a sputtering method or a sol-gel method, and then, by being patterned. Then, the pyroelectric layer 33 is sintered. The temperature at which the pyroelectric layer 33 is sintered is not particularly limited, but in the present embodiment, for example, the pyroelectric layer 33 is sintered at about 400°C. The temperature is a temperature that does not affect the dielectric layer 31.

As shown in Fig. 5C, the second insulating layer 36 is formed around the dielectric layer 31 and the converting section 35. The second insulating layer 36 is formed by a sputtering method or a CVD method, for example, and by being patterned. By adjusting the patterning conditions, the slopes are formed at the places where the first wiring 37 and the second wiring 38 are disposed.

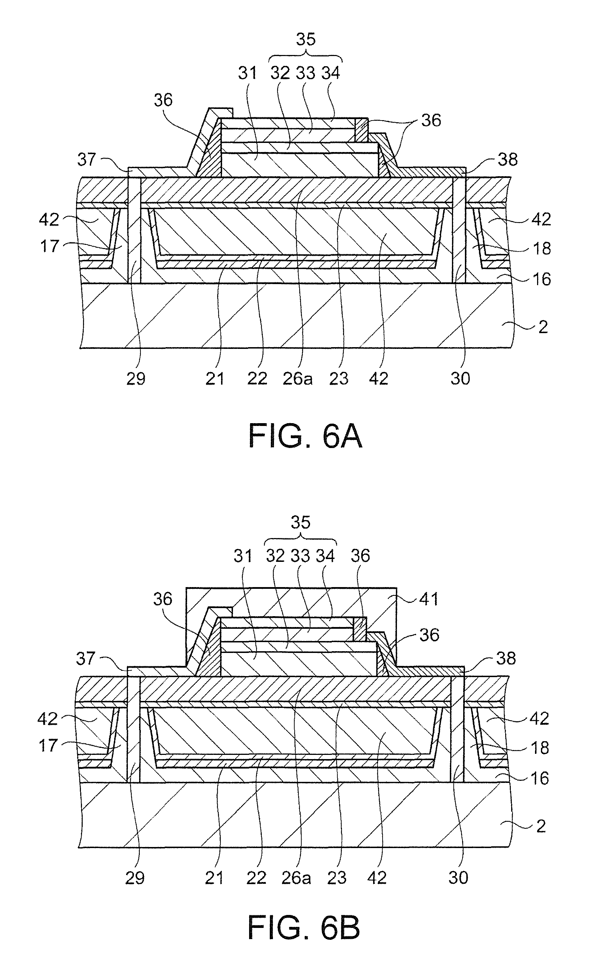

As shown in Fig. 6A, the first wiring 37 is formed on the support substrate layer 26a and on the second insulating layer 36, so that the third metal layer 34 and the first through electrode 29 are electrically connected to each other. Further, the second wiring 38 is formed on the support substrate layer 26a, so that the second metal layer 32 and the second through electrode 30 are electrically connected to each other. The first wiring 37 and the second wiring 38 are formed by a plating method or a sputtering method, for example, and by being patterned.

As shown in Fig. 6B, the third protecting layer 41 is formed to cover the converting section 35 and the dielectric layer 31. The third protecting layer 41 is formed by a CVD method, for example, and by being patterned. The third protecting layer 41 may further be formed to cover the first wiring 37 and the second wiring 38.

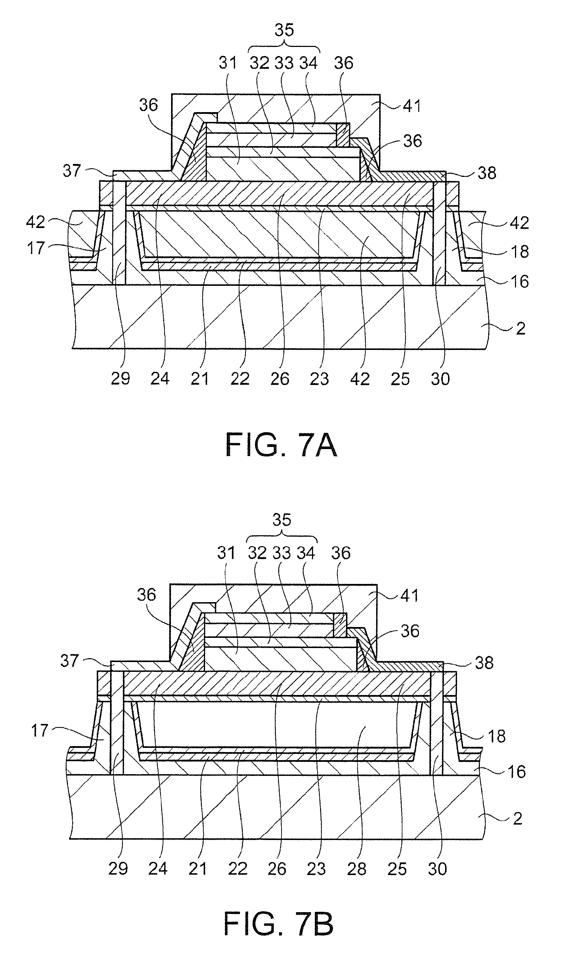

As shown in Fig. 7A, the support substrate layer 26a and the second protecting layer 23 are patterned. Thus, the support substrate 26 is formed in a rectangular shape, and the first arm portion 24 and the second arm portion 25 are formed in a rectangular pillar shape. The first arm portion 24 connects the dielectric layer 31 and the first pillar portion 17, and the second arm portion 25 connects the dielectric layer 31 and the second pillar portion 18.

As shown in Fig. 7B, the sacrificial layer 42 is removed. A place where etching is not performed is masked, and then, the etching is performed to remove the sacrificial layer 42. After the etching, the mask is removed and washed. Since the first pillar portion 17 and the second pillar portion 18 are protected by the first protecting layer 22, the first pillar portion 17 and the second pillar portion 18 are formed without being etched. Since the surface of the support substrate 26 on the side of the base substrate 2 is also protected by the second protecting layer 23, the support substrate 26 is formed without being etched. Thus, the first pillar portion 17, the second pillar portion 18 and the cavity 28 are formed. Further, the frame section 3 may be formed together with the first pillar portion 17 and the second pillar portion 18. The second detection elements 10 to the fourth detection elements 12 are formed in parallel with the first detection elements 9. Through the above processes, the terahertz wave detecting device 1 is completed.

As described above, according to the present embodiment, the following effects are obtained.
(1) According to the present embodiment, the first detection element 9 includes the dielectric layer 31 and the converting section 35. The dielectric layer 31 absorbs the terahertz wave 15 to generate heat. The dielectric layer 31 generates the heat according to the intensity of the terahertz wave 15 incident to the dielectric layer 31. The converting section 35 converts the heat generated in the dielectric layer 31 into an electric signal. Accordingly, the converting section 35 can output the electric signal corresponding to the intensity of the terahertz wave 15 incident to the dielectric layer 31.
(2) According to the present embodiment, the terahertz wave detecting device 1 includes the base substrate 2, in which the first detection elements 9 are arranged on the base substrate 2 with the cavity 28 being interposed therebetween. Since the support substrate 26 is supported by the supporting section 27, it is difficult to conduct the heat of the support substrate 26 and the dielectric layer 31 to the base substrate 2. Accordingly, since the temperature of the converting section 35 increases with high responsiveness by the heat generated in the dielectric layer 31, the first detection elements 9 can detect the terahertz wave 15 with high sensitivity. Since the structures of the second detection elements 10 to the fourth detection elements 12 are the same as that of the first detection elements 9, it is possible to detect the terahertz wave 15 with high sensitivity.
(3) According to the present embodiment, the support substrate 26 and the dielectric layer 31 are interposed between the first metal layer 21 and the second metal layer 32. When the terahertz wave 15 is incident to the dielectric layer 31, the terahertz wave 15 travels in the dielectric layer 31 and the support substrate 26. The terahertz wave 15 is multiply reflected by the first metal layer 21 and the second metal layer 32. Further, while the terahertz wave 15 reflected between the first metal layer 21 and the second metal layer 32 is traveling inside the dielectric layer 31, energy is absorbed in the dielectric layer 31 and is converted into heat. Accordingly, the terahertz wave 15 that is incident to the terahertz wave detecting device 1 is absorbed in the dielectric layer 31 with high efficiency, so that the first detection element 9 can convert the energy into the heat.
(4) According to the present embodiment, since the plural first detection elements 9 are arranged at intervals, the plural converting sections 35 are also arranged at intervals. Further, a portion between the adjacent converting sections 35 functions as a slit. Accordingly, the terahertz wave 15 is diffracted in the converting section 35 to change the traveling direction to enter the dielectric layer 31. As a result, the terahertz wave detecting device 1 can convert the incident terahertz wave 15 into the electric signal with high efficiency.
(5) According to the present embodiment, the second metal layers 32 are arranged with the interval smaller than the wavelength of the terahertz wave 15 absorbed in the dielectric layer 31 in vacuum. Here, since the interval between the adjacent second metal layers 32 is narrow, the terahertz wave 15 is easily diffracted. Accordingly, the terahertz wave 15 can easily enter between the first metal layer 21 and the second metal layer 32.
(6) According to the present embodiment, the length of the second metal layer 32 and the length of the dielectric layer 31 are shorter than the wavelength of the terahertz wave 15 absorbed in the dielectric layer 31 in vacuum. Further, the length of the second metal layer 32 and the length of the dielectric layer 31 are shorter than the length that is twice the amplitude of the terahertz wave 15 absorbed in the dielectric layer 31. Thus, it is possible to reduce the weight of the dielectric layer 31, and thus, it is possible to narrow the first arm portion 24 and the second arm portion 25. Alternatively, it is possible to lengthen the first arm portion 24 and the second arm portion 25. When the first arm portion 24 and the second arm portion 25 are narrow, or when the first arm portion 24 and the second arm portion 25 are long, since it is difficult to conduct the heat of the support substrate 26 to the base substrate 2, the first detection element 9 can easily detect the heat.
(7) According to the present embodiment, the length of the second metal layer 32 is longer than 10 µm. Thus, since the terahertz wave 15 is multiply reflected by the first metal layer 21 and the second metal layer 32, the dielectric layer 31 can absorb the terahertz wave 15 with high efficiency. As a result, the first detection element 9 can detect the terahertz wave 15 with high sensitivity.
(8) According to the present embodiment, the dielectric layer 31 may include any material of zirconium oxide, barium titanate, and hafnium oxide and hafnium silicate. The zirconium oxide, the barium titanate, the hafnium oxide and the hafnium silicate are materials having a high dielectric constant. Accordingly, the dielectric layer 31 can generate a dielectric loss in the terahertz wave 15, thereby converting the energy of the terahertz wave into the heat with high efficiency.
(9) According to the present embodiment, the material of the support substrate 26 includes silicon dioxide. Since silicon and silicon compound are dielectric, the support substrate 26 can absorb the terahertz wave 15 to generate heat. Further, since the silicon and silicon compound have stiffness, the silicon and silicon compound function as a structure that supports the dielectric layer 31 and the converting section 35.

### Second Embodiment

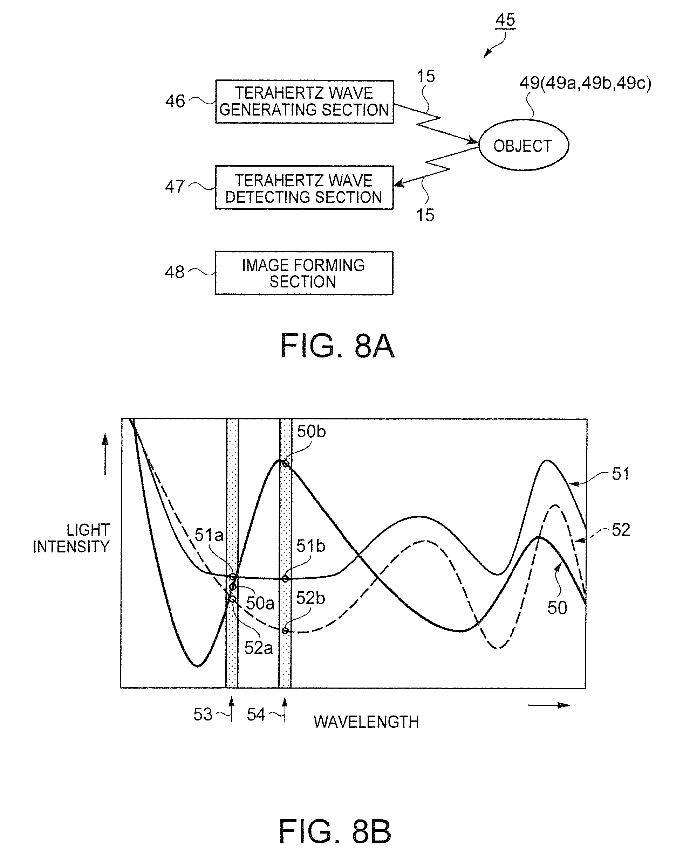

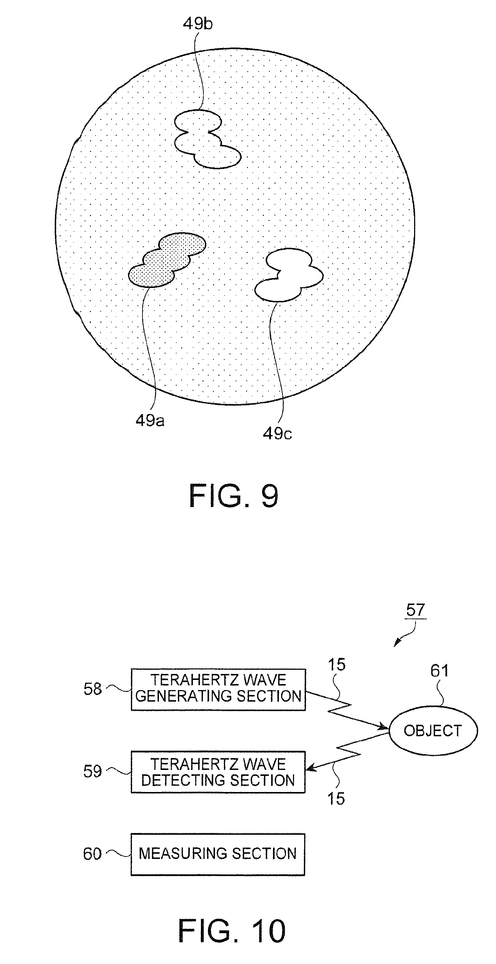

Next, an embodiment of an imaging apparatus using a terahertz wave detecting device will be described with reference to Figs. 8A and 8B and Fig. 9. Fig. 8A is a block diagram illustrating a configuration of the imaging apparatus. Fig. 8B is a graph illustrating a spectrum of an object in a terahertz band. Fig. 9 is a diagram illustrating an image representing a distribution of materials A, B and C of an object.

As shown in Fig. 8A, an imaging apparatus 45 includes a terahertz wave generating section 46, a terahertz wave detecting section 47 and an image forming section 48. The terahertz wave generating section 46 emits a terahertz wave 15 to an object 49. The terahertz wave detecting section 47 detects the terahertz wave 15 passing through the object 49 or the terahertz wave 15 reflected by the object 49. The image forming section 48 generates image data that is data on an image of the object 49 based on a detection result of the terahertz wave detecting section 47.

The terahertz wave generating section 46 may use a method that uses a quantum cascade laser, a photoconductive antenna and a short pulse laser, or a difference frequency generating method that uses a non-linear optical crystal, for example. As the terahertz wave detecting section 47, the above-described terahertz wave detecting device 1 may be used.

The terahertz wave detecting section 47 includes the first detection elements 9 to the fourth detection elements 12, and the respective detection elements detect the terahertz waves 15 having different wavelengths. Accordingly, the terahertz wave detecting section 47 can detect the terahertz waves 15 having four types of wavelengths. The imaging apparatus 45 is a device that detects the terahertz waves 15 having two types of wavelengths using the first detection elements 9 and the second detection elements 10 among the four detection elements to analyze the object 49.

It is assumed that the object 49 that is a target of spectral imaging includes a first material 49a, a second material 49b and a third material 49c. The imaging apparatus 45 performs spectral imaging of the object 49. The terahertz wave detecting section 47 detects the terahertz wave 15 reflected by the object 49. The types of the wavelengths used for a spectrum may be three or more types. Thus, it is possible to analyze various types of the object 49.

The wavelength of the terahertz wave 15 detected by the first detection element 9 is referred to as a first wavelength, and the wavelength detected by the second detection element 10 is referred to as a second wavelength. The light intensity of the first wavelength of the terahertz wave 15 reflected by the object 49 is referred to as a first intensity, and the light intensity of the second wavelength is referred to as a second intensity. The first wavelength and the second wavelength are set so that a difference between the first intensity and the second intensity can be noticeably recognized in the first material 49a, the second material 49b and the third material 49c.

In Fig. 8B, a vertical axis represents the light intensity of the detected terahertz wave 15, in which an upper side in the figure represents a strong intensity compared with a lower side. A horizontal axis represents the wavelength of the terahertz wave 15, in which a right side in the figure represents a long wavelength compared with a left side. A first characteristic line 50 is a line indicating a relationship between the wavelength and the light intensity of the terahertz wave 15 reflected by the first material 49a. Similarly, a second characteristic line 51 represents a characteristic of the terahertz wave 15 in the second material 49b, and a third characteristic line 52 represents a characteristic of the terahertz wave 15 in the third material 49c. On the horizontal axis, portions of a first wavelength 53 and a second wavelength 54 are clearly shown.

The light intensity of the first wavelength 53 of the terahertz wave 15 reflected by the object 49 when the object 49 is the first material 49a is referred to as a first intensity 50a, and the light intensity of the second wavelength 54 is referred to as a second intensity 50b. The first intensity 50a is a value of the first characteristic line 50 at the first wavelength 53, and the second intensity 50b is a value of the first characteristic line 50 at the second wavelength 54. A first wavelength difference that is a value obtained by subtracting the first intensity 50a from the second intensity 50b is a positive value.

Similarly, the light intensity of the first wavelength 53 of the terahertz wave 15 reflected by the object 49 when the object 49 is the second material 49b is referred to as a first intensity 51a, and the light intensity of the second wavelength 54 is referred to as a second intensity 51b. The first intensity 51a is a value of the second characteristic line 51 at the first wavelength 53, and the second intensity 51b is a value of the second characteristic line 51 at the second wavelength 54. A second wavelength difference that is a value obtained by subtracting the first intensity 51a from the second intensity 51b is zero.

The light intensity of the first wavelength 53 of the terahertz wave 15 reflected by the object 49 when the object 49 is the third material 49c is referred to as a first intensity 52a, and the light intensity of the second wavelength 54 is referred to as a second intensity 52b. The first intensity 52a is a value of the third characteristic line 52 at the first wavelength 53, and the second intensity 52b is a value of the third characteristic line 52 at the second wavelength 54. A third wavelength difference that is a value obtained by subtracting the first intensity 52a from the second intensity 52b is a negative value.

When the imaging apparatus 45 performs the spectral imaging of the object 49, first, the terahertz wave generating section 46 generates the terahertz wave 15. Further, the terahertz wave generating section 46 irradiates the object 49 with the terahertz wave 15. Further, the light intensity of the terahertz wave 15 reflected by the object 49 or passed through the object 49 is detected by the terahertz wave detecting section 47. The detection result is transmitted to the image forming section 48 from the terahertz wave detecting section 47. The irradiation of the obj ect 49 with the terahertz wave 15 and the detection of the terahertz wave 15 reflected by the object 49 are performed for all the objects 49 positioned in an inspection region.

The image forming section 48 subtracts the light intensity at the first wavelength 53 from the light intensity at the second wavelength 54 using the detection result of the terahertz wave detecting section 47. Further, the image forming section 48 determines that a portion where the subtraction result is a positive value is the first material 49a. Similarly, the image forming section 48 determines that a portion where the subtraction result is zero is the second material 49b, and determines a portion where the subtraction result is a negative value as the third material 49c.

Further, as shown in Fig. 9, the image forming section 48 creates image data on an image representing the distribution of the first material 49a, the second material 49b and the third material 49c of the object 49. The image data is output to a monitor (not shown) from the image forming section 48, and the monitor displays the image representing the distribution of the first material 49a, the second material 49b and the third material 49c. For example, a region where the first material 49a is distributed is displayed as black, a region where the second material 49b is distributed is displayed as gray, and a region where the third material 49c is distributed is displayed as white, respectively. As described above, the imaging apparatus 45 can perform the determination of the identification of the respective materials that form the object 49 and the distribution measurement of the respective materials together.

The use of the imaging apparatus 45 is not limited to the above description. For example, when a person is irradiated with the terahertz wave 15, the imaging apparatus 45 detects the terahertz wave 15 that passes through the person or is reflected from the person. Then, the image forming section 48 processes the detection result of the detected terahertz wave 15, to thereby make it possible to determine whether the person has a pistol, a knife, illegal drugs or the like. As the terahertz wave detecting section 47, the above-described terahertz wave detecting device 1 may be used. Accordingly, the imaging apparatus 45 can achieve high detection sensitivity.

### Third Embodiment

Next, an embodiment of a measuring apparatus using a terahertz wave detecting device will be described with reference to Fig. 10. Fig. 10 is a block diagram illustrating a structure of the measuring apparatus. As shown in Fig. 10, a measuring apparatus 57 includes a terahertz wave generating section 58 that generates a terahertz wave, a terahertz wave detecting section 59 and a measuring section 60. The terahertz wave generating section 58 irradiates an object 61 with the terahertz wave 15. The terahertz wave detecting section 59 detects the terahertz wave 15 passing through the object 61 or the terahertz wave 15 reflected by the object 61. As the terahertz wave detecting section 59, the above-described terahertz wave detecting device 1 may be used. The measuring section 60 measures the object 61 based on the detection result of the terahertz wave detecting section 59.

Next, a use example of the measuring apparatus 57 will be described. When a spectral measurement of the object 61 is performed using the measuring apparatus 57, first, the terahertz wave 15 is generated by the terahertz wave generating section 58 to irradiate the object 61 with the terahertz wave 15. Further, the terahertz wave detecting section 59 detects the terahertz wave 15 passing through the object 61 or the terahertz wave 15 reflected by the object 61. The detection result is output from the terahertz wave detecting section 59 to the measuring section 60. The irradiation of the object 61 with the terahertz wave 15 and the detection of the terahertz wave 15 passed through the object 61 or the terahertz wave 15 reflected by the object 61 are performed for all the objects 61 positioned in a measurement range.

The measuring section 60 receives inputs of the respective light intensities of the terahertz waves 15 detected in the first detection elements 9 to the fourth detection elements 12 that form the respective pixels 4 from the detection result to perform analysis of ingredients, distributions and the like of the object 61. Further, the measuring section 60 may measure the area or length of the object 61. As the terahertz wave detecting section 59, the above-described terahertz wave detecting device 1 may be used. Accordingly, the measuring apparatus 57 can achieve high detection sensitivity.

### Fourth Embodiment

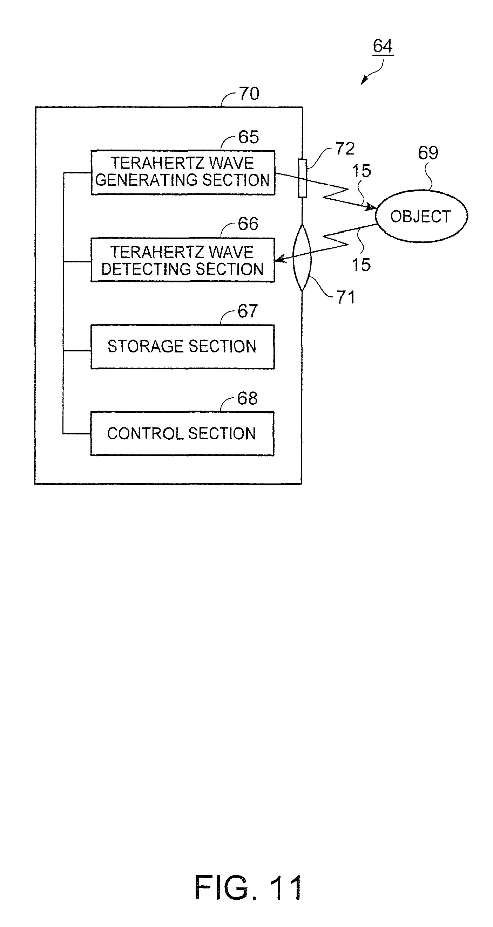

An embodiment of a camera that uses a terahertz wave detecting device will be described with reference to Fig. 11.

Fig. 11 is a block diagram illustrating a structure of a camera. As shown in Fig. 11, a camera 64 includes a terahertz wave generating section 65, a terahertz wave detecting section 66, a storage section 67 and a control section 68. The terahertz wave generating section 65 irradiates an object 69 with a terahertz wave 15. The terahertz wave detecting section 66 detects the terahertz wave 15 reflected by the object 69 or the terahertz wave 15 passing through the object 69. As the terahertz wave detecting section 66, the above-described terahertz wave detecting device 1 may be used. The storage section 67 stores the detection result of the terahertz wave detecting section 66. The control section 68 controls operations of the terahertz wave generating section 65, the terahertz wave detecting section 66, and the storage section 67.

The camera 64 includes a housing 70, in which the terahertz wave generating section 65, the terahertz wave detecting section 66, the storage section 67 and the control section 68 are accommodated. The camera 64 includes a lens 71 that causes the terahertz wave 15 reflected by the object 69 to be image-formed in the terahertz wave detecting section 66. Further, the camera 64 includes a window section 72 which outputs the terahertz wave 15 output by the terahertz wave generating section 65 to the outside of the housing 70. A material of the lens 71 or the window section 72 is formed of silicon, quartz, polyethylene or the like that transmits the terahertz wave 15 to be diffracted. The window section 72 may have a configuration of a simple opening such as a slit.

Next, a use example of the camera 64 will be described. When the object 69 is imaged, first, the control section 68 controls the terahertz wave generating section 65 to generate the terahertz wave 15. Thus, the object 69 is irradiated with the terahertz wave 15. Further, the terahertz wave 15 reflected by the object 69 is image-formed in the terahertz wave detecting section 66 by the lens 71, and the terahertz wave detecting section 66 detects the object 69. The detection result is output to the storage section 67 from the terahertz wave detecting section 66 to be stored. The irradiation of the object 69 with the terahertz wave 15 and the detection of the terahertz wave 15 reflected by the object 69 are performed for all the objects 69 positioned in an imaging range. Further, the camera 64 may transmit the detection result to an external device such as a personal computer. The personal computer may perform various processes based on the detection result.

As the terahertz wave detecting section 66 of the camera 64, the above-described terahertz wave detecting device 1 may be used. Accordingly, the camera 64 can achieve high detection sensitivity.

The embodiments of the invention are not limited to the above-described embodiments, and various modifications or improvements may be made by those skilled in the art within the technical scope of the invention. Further, the invention may include a configuration having substantially the same function, way and result as in the above-described embodiments, or a configuration having the same object and effects as in the above-described embodiments. Furthermore, the invention may include a configuration in which a non-essential configuration in the above-described embodiments is replaced. Hereinafter, modification examples will be described.

### Modification Example 1

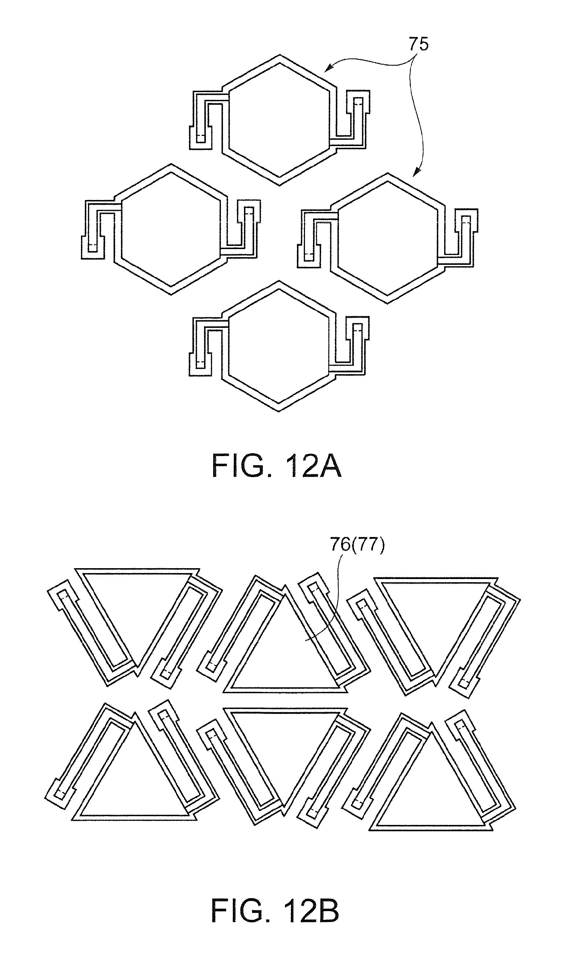

In the first embodiment, the first detection elements 9 are arranged on the base substrate 2 in the lattice form in the horizontal and vertical directions. The arrangement of the first detection elements 9 may be an arrangement pattern other than the lattice form. Fig. 12A is a plan view schematically illustrating a configuration of first detection elements. As shown in Fig. 12A, for example, first detection elements 75 that are detection elements have a planar shape of hexagon. The first detection elements 75 may be arranged in a honey comb structure. Further, the arrangement of the first detection elements 9 may have a repetitive pattern other than the above pattern. In this case, it is possible to use a portion between the adjacent detection elements as a slit to diffract the terahertz wave 15 to allow the terahertz wave 15 to enter the detection elements.

### Modification Example 2

In the first embodiment, four types of detection elements of the first detection elements 9 to the fourth detection elements 12 are provided. The number of types of the detection elements may be one to three, or may be five or more. This may be similarly applied to the number of wavelengths of the detected terahertz wave 15.

### Modification Example 3

In the first embodiment, the shape of the dielectric layer 31 and the second metal layer 32 is square. Fig. 12B is a plan view schematically illustrating a configuration of first detection elements. As shown in Fig. 12B, for example, the shape of a dielectric layer 76 and a second metal layer 77 that are absorbing sections may be triangle. Further, the shape of the dielectric layer 31 and the second metal layer 32 may be rectangle, or may be shape including polygon or ellipse. In this case, similarly, it is preferable that a dielectric layer length and a second metal layer length in its arrangement direction be shorter than the wavelength in vacuum of the terahertz wave 15. Further, it is preferable that the dielectric layer length and the second metal layer length in the arrangement direction be shorter than a length that is twice the amplitude. Thus, it is possible to narrow or lengthen the first arm portion 24 and the second arm portion 25, and thus, it is possible to detect the terahertz wave 15 with high sensitivity.

### Modification Example 4

In the first embodiment, the terahertz wave 15 that travels toward the base substrate 2 from the side of the converting section 35 is diffracted by the converting section 35. A slit may be formed in the first metal layer 21. Further, the terahertz wave 15 that travels toward the converting section 35 from the base substrate 2 may be diffracted by the first metal layer 21. In this case, similarly, since the terahertz wave 15 is repeatedly reflected between the first metal layer 21 and the second metal layer 32, the dielectric layer 31 can absorb the terahertz wave 15 with high efficiency.

## Claims

1. A terahertz wave detecting device comprising:
a substrate; and
a plurality of detection elements that is arranged above the substrate,
wherein each of the detection elements includes
a first metal layer that is provided on the substrate,
a support substrate that is provided to be spaced from the first metal layer,
an absorbing section that is provided above the support substrate and configured to absorb a terahertz wave to generate heat, and
a converting section that includes a second metal layer, a pyroelectric layer and a third metal layer layered on the absorbing section, and is configured to convert the heat generated in the absorbing section into an electric signal.

2. The terahertz wave detecting device according to claim 1,
wherein the plurality of detection elements is arranged so that the terahertz wave is diffracted between the adjacent converting sections.

3. The terahertz wave detecting device according to claim 1 or 2,
wherein an arrangement interval of the second metal layers is shorter than a wavelength in vacuum of the terahertz wave absorbed by the absorbing section.

4. The terahertz wave detecting device according to any one of claims 1 to 3,
wherein each of the detection elements includes a pillar arm portion that is connected to the support substrate, and a supporting section that supports the support substrate to be spaced from the substrate, and
the length of the second metal layer and the length of the absorbing section in an arrangement direction of the detection elements are shorter than the wavelength in vacuum of the terahertz wave absorbed by the absorbing section and are longer than 10 µm.

5. The terahertz wave detecting device according to any one of claims 1 to 4,
wherein the length of the second metal layer and the length of the absorbing section in the arrangement direction of the detection elements are shorter than a length that is twice the amplitude of the terahertz wave absorbed by the absorbing section.

6. The terahertz wave detecting device according to any one of claims 1 to 5,
wherein a material of the absorbing section includes any one of zirconium oxide, barium titanate, hafnium oxide and hafnium silicate.

7. The terahertz wave detecting device according to any one of claims 1 to 6,
wherein a main material of the support substrate is silicon.

8. A camera comprising:
a terahertz wave generating section that is configured to generate a terahertz wave;
a terahertz wave detecting section that is configured to detect the terahertz wave that is emitted from the terahertz wave generating section and passes through or is reflected from an object; and
a storage section that is configured to store a detection result of the terahertz wave detecting section,
wherein the terahertz wave detecting section is the terahertz wave detecting device according to any one of claims 1 to 7.

9. An imaging apparatus comprising:
a terahertz wave generating section that is configured to generate a terahertz wave;
a terahertz wave detecting section that is configured to detect the terahertz wave that is emitted from the terahertz wave generating section and passes through or is reflected from an object; and
an image forming section that is configured to form an image of the object based on a detection result of the terahertz wave detecting section,
wherein the terahertz wave detecting section is the terahertz wave detecting device according to any one of claims 1 to 7.

10. A measuring apparatus comprising:
a terahertz wave generating section that is configured to generate a terahertz wave;
a terahertz wave detecting section that is configured to detect the terahertz wave that is emitted from the terahertz wave generating section and passes through or is reflected from an object; and
a measuring section that is configured to measure the object based on a detection result of the terahertz wave detecting section,
wherein the terahertz wave detecting section is the terahertz wave detecting device according to any one of claims 1 to 7.
